# EUROPÄISCHE PATENTSCHRIFT

(11) **EP 1 362 810 B1**
(45) Veröffentlichungstag und Bekanntmachung des Hinweises auf die Patenterteilung: **08.08.2007**
(21) Anmeldenummer: 03006979.3
(22) Anmeldetag: 27.03.2003
(51) Int. Cl.: B65G 63/00, B61D 47/00

(54) **Be- und Entladestation für Ladungsträger von Fahrzeugkarossen, Fahrzeugen und dergleichen**
Loading and unloading station for carriers of vehicle bodies, vehicles or similar
Poste de chargement et déchargement de porteurs de carrosseries de véhicule, de véhicules ou similaires

(30) Priorität: 16.05.2002 DE 10221733
(43) Veröffentlichungstag der Anmeldung: 19.11.2003
(73) Patentinhaber: Dr.Ing.h.c. F. Porsche Aktiengesellschaft, 70435 Stuttgart (DE); UTC Uebach Technologie Consulting GmbH, 57572 Niederfischbach (DE)
(72) Erfinder: Beerhalter, Christoph, 73547 Lorch (DE); Böttcher, Lothar, 04179 Leipzig (DE); Wolf, Günther, 74321 Bietigheim (DE); Wittenmayer, Günther, 71282 Hemmingen (DE); Krause, Claus-Peter, 70736 Fellbach (DE); Uebach, Eckhard, 57258 Freudenberg-Heisberg (DE); Hopf, Ernst, 83308 Trostberg (DE); Krämer, Walter, 67149 Meckenheim (DE)

(56) Entgegenhaltungen:
- EP-A- 0 667 273
- WO-A-81/01997
- GB-A- 998 365
- US-A- 5 890 855

## Beschreibung

Die Erfindung bezieht sich auf eine Be- und Entladestation für Ladungsträger von Fahrzeugkarossen, Fahrzeugen und dgl. nach dem Oberbegriff des Anspruchs 1.

Bei Be- und Entladestationen für von Transportmitteln abnehmbaren Gütern besteht das Problem meist darin, daß die Güter einerseits nicht kontinuierlich einem Bestimmungsort zuführbar sind und andererseits ein die Güter aufnehmendes Traggestell oder dgl. nicht in einem Kreislauf zu dem Transportmittel wieder zurückzuführen ist und somit kein schneller Durchlauf von den zu transportierenden Gütern und den leeren Transportgestellen gewährleistet ist.

Die Aufgabe der Erfindung besteht darin, eine Be- und Entladestation für Fahrzeugkarossen oder Fahrzeugen zu schaffen, mit der in einfacher Weise in einer kontinuierlichen Abfolge Fahrzeugkarossen oder Fahrzeuge einer Fertigungsstraße oder dgl. zuführbar sind und in Folge ein Abtransport von leeren Trägern für die Karossen oder Fahrzeugen gewährleistet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen im wesentlichen darin, daß in hintereinanderfolgenden Arbeitsstationen von einer Karossen- oder Fahrzeugentladung aus einem Bahnwaggon bis zur Zuführung der Karossen oder der Fahrzeuge zu einer Fertigungsstraße oder dgl. und einem Abtransport und einer Wiederladung von mehreren leeren Ladungsträgern in die entladenen Bahnwaggons ein kontinuierlich aufeinander abgestimmter Entladungsprozeß für die Karossen oder Fahrzeuge und ein gleichzeitiger Beladungsprozeß der leeren Karossen-Ladungsträger in die Bahnwaggons gewährleistet ist.

Insbesondere wird dies dadurch erreicht, indem eine Ladungseinheit mit zwei in Längsrichtung des Bahnwaggons auf Ladungsträgern ausgerichteten Fahrzeugkarossen über eine Ent- und Beladevorrichtung eines parallel zum Bahnwaggon in Pfeilrichtung verfahrbaren Ladewagens in Querrichtung hierzu entladen wird. Auf einem parallel zum Ladewagen stehenden und quer zu diesem verfahrbaren Drehtisch wird dann der Ladungsträger transportiert. Von diesem ist die längs ausgerichtete Ladungseinheit einer hierzu quer angeordneten Kettenförderungsvorrichtung zuführbar. Von dieser wird die Ladungseinheit dann über eine Entstapelvorrichtung in hintereinander angeordnete Ladungsträger vereinzelt und die Fahrzeugkarosse wird über eine Vorrichtung abgenommen und auf einem Gestell abgesetzt und über eine Entnahmevorrichtung der Fertigungsstätte zugeführt. Dieser Ablauf der Zuführung der Karossen zur Fertigungsstätte oder dgl. und dem Wegtransport der Ladungsträger läuft automatisch ab und die Vorgänge in den Arbeitsstationen sind so aufeinander abgestimmt, daß der Entladung die Beladung folgen kann.

Alle Vorgänge werden durch eine Steuerungstechnik entsprechend gesteuert, so daß die Abfolge der Übernahme der Ladungsträger in den einzelnen Arbeitsstationen aufeinander abstimmbar sind und ein kontinuierlicher Fluß der Karossen zur Fertigungsstätte und dgl. erfolgen kann.

Die einzelnen neun nacheinander zu durchlaufenden Arbeitsstationen der Be- und Entladestation erfolgt nach der Erfindung in vorteilhafter Weise derart, daß in der ersten Arbeitsstation ein Entladen der Ladungseinheit über den Ladewagen mittels einer integrierten Hub- und Transporteinrichtung erfolgt. In der zweiten Arbeitsstation ist die Ladungseinheit über Kettenförderer des Ladungswagens einem verfahrbarem Drehtisch mit einem Kettenförderer zuführbar, von dem in der dritten Arbeitsstation über die Kettenförderer die Ladungseinheit einem weiteren um 90° versetzten Kettenförderer eines Transportbandes weitergeleitet wird. In der vierten Arbeitsstation wird über die als Stapelvorrichtung ausgebildete Portalhebeeinrichtung die Ladungseinheit zu den vereinzelten Ladungsträgern getrennt. Danach werden in der fünften Arbeitsstation die Karossen jeweils vom Ladungsträger abgehoben und diese im Kreislauf der weiteren Arbeitsstation in einer Stapeleinrichtung zu einem Viererstapel übereinanderliegend zusammengefaßt. In der siebten Arbeitsstation sind diese einem ortsfesten Drehtisch zuführbar. In der achten Arbeitsstation ist der Viererstapel vom Drehtisch auf den Ladewagen aufsetzbar und von diesem in der neunten Arbeitsstation in einen leeren Bahnwaggon einschiebbar.

Nach einem Durchlauf der Ladungsträger bzw. der Ladungseinheit von wenigstens fünf Arbeitsstationen ist die Karosse einer Fertigungsstätte oder dgl. zuführbar. Anschließend an diese Arbeitsstationen kann der leere Ladungsträger in Folge weitertransportiert werden und gelangt nach wenigsten vier weiteren Arbeitsstationen in den von Karossen entleerten Bahnwaggon zurück. Durch diese nacheinander durchlaufenden Arbeitsstationen ist eine kontinuierliche Versorgung mit Karossen und Abförderung von leeren Ladungsträgern in den Bahnwaggon in schneller Folge möglich.

Durch eine erfindungsgemäße Verwendung von sogenannten Drehtischen wird ein vereinfachtes, exaktes Umsetzen der Ladungseinheit mit den Karossen von einer Querrichtung in eine Längsrichtung und umgekehrt möglich. Hierzu ist der Ladewagen auf Schienen parallel zum Bahnwaggon verfahrbar und einerseits in der ersten Arbeitsposition entsprechend einer Übergabeposition für die Ladungseinheit und andererseits in der achten Arbeitsposition entsprechend einer weiteren Übergabeposition eines Viererstapels vom ortsfest, verschwenkbaren Drehtisch in einem Kreislauf zurück in die erste Übergabeposition zum Verstauen des Viererstapels in einen leeren Bahnwaggon möglich. Die Drehtische sind jeweils mit sogenannten Kettenförderern ausgestattet, so daß eine Übergabe der Ladungseinheit bzw. der Ladungsträger an die weitertransportierenden Kettenförderer der Einrichtung in einfacher Weise möglich wird.

Damit ein problemloses Entladen und Beladen der Bahnwaggons in den Ladewagen bzw. aus dem Ladewagen erfolgen kann, weist dieser zwei beabstandete Hubgabeln auf, zwischen denen Kettenförderer für die Ladungseinheit bzw. für den unteren Ladungsträger angeordnet sind. Die Hubgabeln greifen in in der ersten Arbeitsposition zum Transportieren und Anheben in stirnseitige Aufnahmen der Querträger von unten her ein. Insbesondere ist in der ersten Arbeitsstation die Ladungseinheit auf die Kettenförderer des Ladewagens absetzbar und in der zweiten Arbeitsposition auf den parallel und ausgerichtet zum Ladewagen stehenden Drehtisch, auf die anschließenden Kettenförderer des Drehtisches verschiebbar. Der Drehtisch ist insbesondere in einem rechten Winkel zur Längsachse des Ladewagens verfahrbar, wobei die Ladungseinheit über ein Drehgestell des Drehtisches um einen rechten Winkel derart verdrehbar ist, so daß die aufgesetzten Fahrzeugkarossen mit ihrem Fahrzeugbug entgegen der Verfahrrichtung des Drehtisches zeigen. Die Drehung der Ladungseinheit mit den Karossen wird erforderlich, damit diese in gewünschter Ausrichtung der Fertigungsstraße zugeführt werden können.

Zum Abfördern der Ladungseinheit vom Drehtisch ist eine zu der Ladungseinheit unter einem rechten Winkel anschließende Transportstrecke auf Kettenförderern vorgesehen, auf welche die Ladungseinheit vom Drehtisch selbsttätig verfahrbar ist.

Damit die übereinander angeordneten Ladungsträgern vereinzelt werden können, ist eine sogenannte Portal-Stapelvorrichtung beispielsweise mit ausfahrbaren sowie heb- und senkbaren Gabeln vorgesehen, welche die Ladungseinheit in der vierten Arbeitsposition in Ladungsträger vereinzelt.

Hierbei wird zuerst der obere Ladungsträger angehoben und der freiliegende untere Ladungsträger wird weitertransportiert. Der obere Ladungsträger wird nachfolgend abgesenkt und die Karosse wird auf einem Aufnahmegestell abgesetzt. Die Ladungsträger sind nunmehr in einfacher Weise so vereinzelt, daß die Karossen abgenommen werden können und auf ein Gestell absetzbar sind von wo aus sie über eine Einrichtung weitergefördert werden.

Die nunmehr freien Ladungsträger werden auf eine Transportstrecke gerollt, welche parallel zum Ladewagen verläuft. In der sechsten Arbeitsstation werden die Ladungsträger einer Stapelvorrichtung zugeführt, die über eine Hubeinrichtung eine Stapelung von vier Ladungsträgern zu einem Viererstapel derart übereinander ausführt, daß jeweils der untenliegende Ladungsträger anhebbar ist und die weiteren Ladungsträger nacheinander unterfahrbar sind. Die einzelnen Ladungsträger weisen an jeder Seite hochstehende Rungen bzw. Stützen auf, an der sich bei der Übereinanderstapelung der obenliegenden Ladungsträger bei einer Ladungseinheit abstützt. Vor der Stapelung der Ladungsträger zu einer Vierereinheit werden diese hochstehenden Rungen bzw. Stützen vorher mittels einer Einrichtung eingeklappt.

Vom gedrehten Drehtisch aus wird der parallel zum Ladewagen angeordnete Viererstapel in den Ladewagen überführt, wobei in der achten Arbeitsstation über die Ent- und Beladevorrichtung des Ladewagens der Viererstapel anhebbar ist und über die Kettenförderer in der neunten Arbeitsposition in den von der Ladungseinheit entleerten Bahnwaggon einsetzbar ist.

Die leeren Bahnwaggons werden nacheinander mit den Ladungseinheiten bestehend aus einem Viererstapel beladen, so daß hiermit der Kreislauf von der Entladung der Karossen auf die Ladungsträger bis zur Beladung der Ladungseinheiten abgeschlossen ist.

Eine Be- und Entladestation für Karossen oder Fahrzeuge ist in der Zeichnung mit der Abfolge der Arbeitsstationen schematisch dargestellt.
Es zeigen
- Fig. 1: einen schematischen Ablaufplan der Be- und Entladestation,
- Fig. 2: eine Ansicht auf eine Ladungseinheit bestehen aus zwei Ladungsträgern mit aufgesetzten Karossen und
- Fig. 3: eine Ansicht auf einen Viererstapel bestehend aus vier übereinander angeordneten Ladungsträgern mit eingeklappten Rungen.

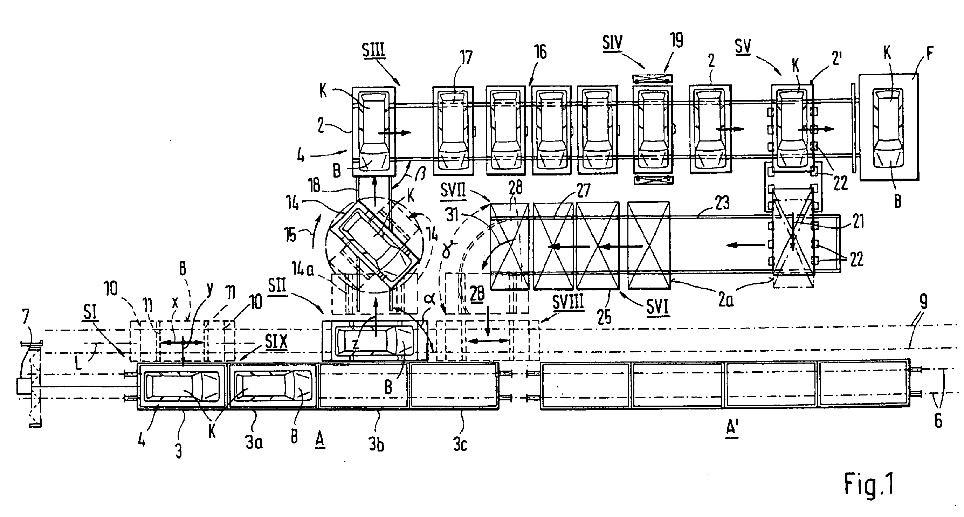

Eine Be- und Entladestation gem. der Zeichnung Fig. 1 umfaßt mehrere sogenannte Arbeitsstationen S I bis S IX, in denen die Fahrzeugkarossen K als vorgefertigte Fahrzeuge auf Ladungsträgern 2 von einem Bahnwaggon 3 auf weiterfördernde Einrichtungen übergeben werden und im Kreislauf leere Ladungsträger 2a wieder in den Bahnwaggon 3 zurückgeladen werden.

Die Karossen K bzw. die vorgefertigten Fahrzeuge sind in den Ladungsträgern 2 gehalten, von denen zwei übereinandergesetzt eine Ladungseinheit 4 ergeben, welche in den Bahnwaggons 3 transportiert werden. Die Ladungseinheiten 4 bzw. die einzelnen Ladungsträger 2 stehen standardmäßig alle in einer gleichen Richtung.

Die in der Zeichnung dargestellten zwei Waggoneinheiten A und A' sind mit den Ladungseinheiten 4 beladen. Die Entladung erfolgt im Wechsel mit der Beladung der leeren Ladungsträger 2 als sogenannter Viererstapel V, wobei die Waggoneinheit A' nicht mit leeren Ladungsträgern 2 beladen wird, damit bei einer neuen Beladung mit Ladungseinheiten 4 alle Waggons 3 wieder mit den zurückgeführten Ladungsträgern 2 beladbar sind.

Die Entladung der Bahnwaggons erfolgt automatisch durch elektrische Ansteuerungen und Signalabgaben in der Weise, daß die Bahnwaggons 3 über die Gleise 6 beispielsweise in eine Halle gefahren werden bzw. über eine Spielwinde 7 in die Halle gezogen und zur Entladung der Ladungseinheiten 4 entsprechend positioniert werden. Die Türen der Waggons 3 werden manuell geöffnet und eine Bedienperson gibt die automatische Entladung frei.

Parallel zur Schiene 6 des Bahnwaggons 3 wird ein Ladewagen 8 ebenfalls auf Schienen 9 geführt, der automatisch eine entsprechende Arbeitsstation S I zum Entladen der Ladeeinheiten 4 aus dem ersten Waggon 3 einnimmt und nachfolgend die weiteren Waggons 3a, 3b, 3c usw. entlädt.

Der Ladewagen 8 weist eine Vorrichtung 10 mit aus- und einfahrbaren Hubgabeln auf, zwischen denen Kettenförderer 11 angeordnet sind. Diese Hubgabeln untergreifen den unteren Ladungsträger 2, an beiden Stirnseiten 12, indem diese in stirnseitige Ausnehmungen 13 eingreifen. Die Ladungseinheit 4 bestehend aus den zwei übereinanderliegenden Ladungsträgern 2, 2' wird über die Hubgabeln geringfügig vertikal angehoben und durch Einziehen der entsprechenden Hubgabeln 10 auf die Plattform des Ladewagens 8 auf den Kettenförderern 11 abgesetzt. Danach fährt der Ladewagen 8 auf den Schienen 9 in die Arbeitsstation S II, in welcher der Ladewagen 8 einem verfahrbaren Drehtisch 14 gegenübersteht, der im rechten Winkel α zu den Schienen 9 des Ladewagens 8 geführt ist. Die Ladungseinheit 4 mit den übereinander angeordneten zwei Ladungsträgern 2, 2' wird über die Kettenförderer 11 auf den weiteren Kettenförderer 14a des Drehtisches 14 überführt. In dieser Arbeitsstation S II ist der Drehtisch 14 parallel zu den Schienen 9 ausgerichtet.

Damit die Karossen K eine vorbestimmte Richtung einnehmen können, bei welcher der Fahrzeugbus B in Richtung Bahnwaggon 3 usw. zeigt, erfolgt über den Drehtisch 14 eine Verdrehung der Ladungseinheit 4 um 90° in Pfeilrichtung 15. Der Drehtisch fährt auf einer Führungsbahn 18 in die Arbeitsstation S III, bei welcher der Drehtisch 14 einem Transportband 16 mit Kettenförderern 17 gegenüber steht. Dieses Band 16 verläuft in einem rechten Winkel β zur Führungsbahn 18 und parallel zu den Schienen 6 und 9.

Von Kettenförderern 14a des Drehtisches 14 erfolgt nun automatisch eine Übergabe der Ladungseinheit 4 an die Kettenförderer 17 des Transportbandes 16. Die Ladungseinheiten 4 werden in der Arbeitsstation S IV einer sogenannten Entstapelvorrichtung 19 zugeführt, in welcher die Ladungseinheiten 4 in die beiden Ladungsträger 2, 2' vereinzelt werden.

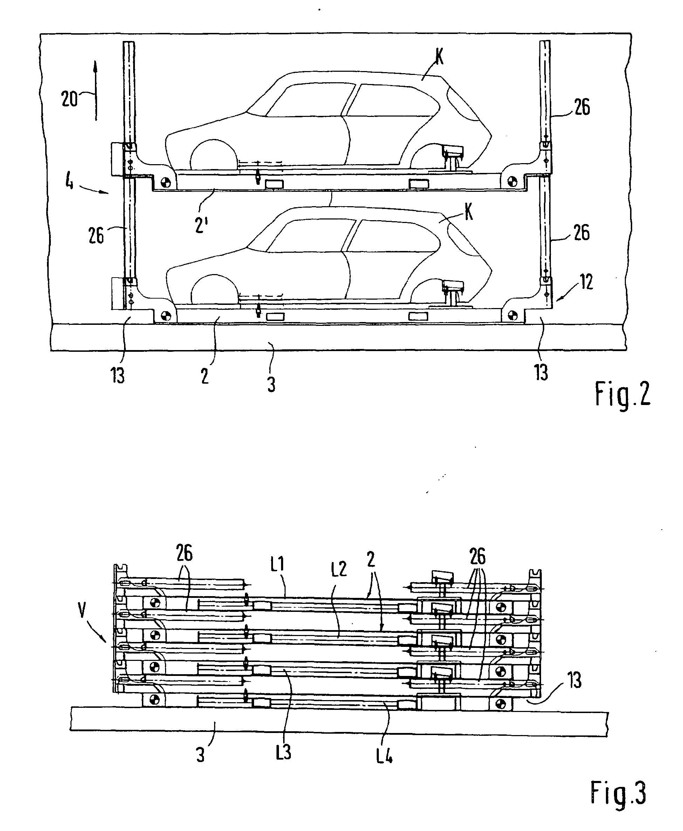

Die Entstapelvorrichtung 19 hebt über Gabeln oder dgl. Einrichtungen den oberen Ladungsträger 2' in Pfeilrichtung 20 an, was in Fig. 2 dargestellt ist, so daß der untere Ladungsträger 2 freikommt und weggefahren werden kann. Danach wird der obere Ladungsträger 2' auf die Kettenförderer 17 abgesenkt, so daß die Ladungsträger 2, 2' hintereinander in einer gemeinsamen Ebene auf den Kettenförderern angeordnet sind, wie auch Fig. 1 näher zeigt. Danach werden die Karossen K nacheinander von den Ladungsträgern 2, 2' abgenommen und einer Fertigungsstraße F oder dgl. weiteren Fertigungsstätte zugeführt. Die leeren Ladungsträger 2a usw. werden in einem Kreislauf quer zum Transportband 16 in Pfeilrichtung 21 beispielsweise über weitere Kettenförderer oder Rollen 22 auf ein Transportband mit Kettenförderern 23 weiterbefördert. Dieses Transportband ist wiederum parallel zu den Schienen 9 des Ladewagens 8 angeordnet, so daß eine einfache Zuladung auf den Ladewagen 8 erfolgen kann.

Bevor die Beladung erfolgt, werden die Ladungsträger 2, 2' in einer Stapelvorrichtung 25 zu einem sogenannten Viererstapel V gem. Fig. 3 zusammengefaßt. Die Ladungsträger 2 usw. sind alle übereinander angeordnet. Bevor sie in die Stapelvorrichtung 25 gelangen, werden die hochstehenden Rungen 26 der Ladungsträger 2 in einer Einrichtung automatisch eingeklappt.

In der Stapelvorrichtung 25 wird zuerst der erste leere Ladungsträger L1, wie in Fig. 3 mit der Bezeichnung L1 bis L4 dokumentiert, angehoben, danach wird der zweite Ladungsträger L2 darunter gefahren und beide Ladungsträger L1 und L2 angehoben. Nachfolgend wird der dritte Ladungsträger L3 unter L1 und L2 gefahren und danach L1, L2 und L3 angehoben und nachfolgend L4 unter L1, L2 und L3 gefahren und alle vier Ladungsträger L1, L2, L3 und L4 als sogenannter Viererstapel V über Kettenförderer 27 auf einen anschließenden Drehtisch 28 gesetzt.

Dieser Drehtisch 28 ist um eine Schwenkachse 29 verdrehbar und kann sich nach der Aufnahme des Viererstapels V automatisch um einen Winkel δ von 90° parallel liegend zum Ladewagen 8 in Pfeilrichtung 31 verschwenken. Zum Abstützen des Drehtisches 28 zur Aufstandsfläche hin sind Rollen oder dgl. vorgesehen, die auf einer Führungsbahn laufen, welches beispielsweise als Stahlbahn 30 ausgeführt ist.

Über die Ent- und Beladevorrichtung 10 des Ladewagens 8 wird der Viererstapel V bestehend aus den vier übereinander angeordneten Ladungsträgern L1, L2, L3 und L4 über die Vorrichtung 10 aufgenommen und von hier aus in den leeren Waggon 3 usw. verladen.

Der Ladewagen 8 ist mit einem automatischen Positioniersystem ausgestattet über das die exakte Aufnahmeposition für die Ladungseinheit 4 zu erkennen ist, um danach Transportaktionen zu steuern. Insbesondere sind hierzu Markierungen und Referenzpunkte am Bahnwaggon 3 usw. und an den Ladungsträgern 2, 2' bzw. an den Ladungseinheiten 4 sowie an den Übergabepositionen bzw. an den einzelnen Arbeitsstationen S I bis S IX vorgesehen. Die einzelnen Abläufe vom Entladen bis zur Zuführung der Karosse K zur Fertigungsstätte F und dem Rücktransport der Ladungsträger 2, 2' in den Bahnwaggon 3 sind über Modulsteuerungen derart aufeinander abgestimmt, daß ein kontinuierlicher Kreislauf zur Ent- und Beladung entsteht.

## Patentansprüche

1. Be- und Entladestation für Ladungsträger (2) von Fahrzeugkarossen, Fahrzeugen und dgl., die in einem Bahnwaggon (3) transportierbar und von diesem in mehreren aufeinanderfolgenden Arbeitsstationen einer Fertigungsstätte zuführbar sind, **dadurch gekennzeichnet, daß** mit Fahrzeugkarossen (K) bestückte Ladungseinheiten (4) von dem Bahnwaggon (3) aus nach einem Durchlauf von Arbeitsstationen (S 1 bis S V) bis zu einer Fertigungsstätte (F) förderbar und die Karossen abladbar sind, und nachfolgend in einem Kreislauf die leeren Ladungsträger (2) über Arbeitsstationen (S VI bis S IX) wieder dem Bahnwaggon (3) zuführbar sind.

2. Be- und Entladestation nach Anspruch 1, **dadurch gekennzeichnet, daß** eine Ladungseinheit (4) mit zwei in Längsrichtung der Bahnwaggons (3) auf Ladungsträgern (2) ausgerichteten Fahrzeugkarossen (K) über eine Ent- und Beladevorrichtung (10) eines parallel zum Bahnwaggon (3, 3a, 3b, 3c) (Pfeilrichtungen X) verfahrbaren Ladewagens (8) in Querrichtung (Pfeilrichtung Y) hierzu entladen und auf einem parallel zum Ladewagen (8) stehenden und quer zu diesem (Pfeilrichtung Z) verfahrbaren Drehtisch (14) transportierbar ist, von dem die längs ausgerichtete Ladungseinheit (4) einer hierzu quer angeordneten Transporteinrichtung (16) zuführbar ist, von dem die Ladungseinheit (4) über eine Entstapelvorrichtung (19) in hintereinander angeordnete Ladungsträger (2, 2') vereinzelbar ist und die Fahrazeugkarosse (K) über eine Vorrichtung abgenommen und auf einem Gestell abgesetzt und über eine Entnahmevorrichtung der Fertigungsstätte (F) zuführbar ist.

3. Be- und Entladestation nach den Ansprüchen 1 oder 2, **dadurch gekennzeichnet, daß** die Ladungseinheit (4) mit den zwei Ladungsträgern (2, 2') übereinander im Bahnwaggon (3, 3a, 3b, 3c) angeordnet ist und daß in einer Arbeitsstation (SI) ein Entladen der Ladungseinheit (4) über den Ladewagen (8) mittels der Vorrichtung (10) über eine integrierte Hub- und Transporteinrichtung erfolgt und daß in einer Arbeitsstation (S II) die Ladungseinheit (4) über Kettenförderer (11) des Ladewagens (8) dem verfahrbaren Drehtisch (14) mit einem weiteren Kettenförderer (14a) zuführbar ist, von dem in einer Arbeitsstation (S III) über die Kettenförderer (11) die Ladungseinheit (4) einem weiteren um einen Winkel β von 90° versetzten Kettenförderer (17) der anschließenden Einrichtung (16) weitergeleitet wird, und daß in einer Arbeitsstation (S IV) über die als Entstapelvorrichtung (19) ausgebildete Portalhebeeinrichtung die Ladungseinheit (4) in einzelne in einer Ebene angeordnete Ladungsträger (2, 2') getrennt und danach in einer Arbeitsstation (S V) die Karossen (K) jeweils vom Ladungsträger (2, 2') abgehoben werden, und diese im Kreislauf in einer weiteren Arbeitsstaton (S VI) in einer Stapeleinrichtung (25) zu einem Viererstapel (V) übereinanderliegend zusammengefaßt und in einer Arbeitsstation (S VII) einem ortsfest verschwenkbaren Drehtisch (28) zuführbar ist, und in einer Arbeitsstation (S VIII) vom geschwenkten Drehtisch (28) über Kettenförderer auf den positionierten Ladewagen (8) aufsetzbar und von diesem in einer Arbeitsstation (S IX) in einen leeren Bahnwaggon (3, 3a) einschiebbar ist.

4. Be- und Entladestation nach den Ansprüchen 1, 2 oder 3, **dadurch gekennzeichnet, daß** der Ladewagen (8) auf Schienen (9) parallel zum Bahnwaggon (3) verfahrbar ist und einerseits in der Arbeitsstation (SI)- entsprechend einer ersten Übergabeposition - für die Ladungseinheit (4) und andererseits in der Arbeitsstation (SVIII) - entsprechend einer weiteren Übergabeposition - der Viererstapel (V) vom ortsfest verschwenkbaren Drehtisch (28') in einem Kreislauf zurück in die erste Arbeitsstation (I) entsprechend der Arbeitsstation (IX) zum Verstauen des Viererstapels (V) in den leeren Bahnwaggon (3) transportierbar ist.

5. Be- und Entladestation nach den Ansprüchen 1, 2, 3 oder 4, **dadurch gekennzeichnet, daß** der Ladewagen (8) in der Vorrichtung (10) zwei beabstandete Hubgabeln aufweist, zwischen denen die Kettenförderer (11) für die Ladungseinheit (4) bzw. für den unteren Ladungsträger (2') der Einheit (4) angeordnet sind und in der Arbeitsstation (SI) die Hubgabeln der Vorrichtung (10) zum Transportieren und Anheben der Ladungseinheit (4) in stirnseitige Aufnahmen (13) der Träger von unten her eingreifen.

6. Be- und Entladestation nach den Ansprüchen 1,2,3,4 oder 5, **dadurch gekennzeichnet, daß** in der Arbeitsposition (S I) die Ladungseinheit (4) auf die Kettenförderer (11) des Ladewagens (8) absetzbar sind und auf den parallel und ausgerichtet zum Ladewagen (8) angeordnetem verfahrbaren Drehtisch (14) in der Arbeitsstation (S II), auf die anschließenden Kettenförderer (15) des Drehtisches (14) verschiebbar ist.

7. Be- und Entladestation nach Anspruch 6, **dadurch gekennzeichnet, daß** der verfahrbare Drehtisch (14) in einem rechten Winkel zur Längsachse (L) des Ladewagens (8) in Pfeilrichtung (15) verdrehbar ist und die Ladungseinheit (4) über ein Drehgestell des Drehtisches (14) um einen Winkel α von 90° derart verdrehbar ist, daß die aufgesetzten Fahrzeugkarossen (K) mit ihrem Fahrzeugbug (B) entgegen der Verfahrichtung des Drehtisches (14) zeigen.

8. Be- und Entladestation nach einem oder mehreren der vorhergehenden Ansprüche, **dadurch gekennzeichnet, daß** der Drehtisch (14) in der Arbeitsstation (SIII), welche einer Übergabeposition entspricht, eine zu der Ladungseinheit (4) unter einem rechten Winkel β hierzu anschließenden Transportstrecke (16) auf Kettenförderern (17) zuführbar ist, auf welche die Ladungseinheit (4) vom Drehtisch (14) selbsttätig verfahrbar ist.

9. Be- und Entladestation nach einem oder mehreren der vorhergehenden Ansprüche, **dadurch gekennzeichnet, daß** die Ladungseinheit (4) über die Kettenförderer (14a) des Drehtisches (14) von der Arbeitsstation (S III) der Entstapelvorrichtung (19) mit ausfahrbaren sowie heb- und senkbaren Gabeln zuführbar ist, welche die Ladungseinheit (4) in der Arbeitsstation (S IV) in voneinander getrennte Ladungsträger (2, 2') derart vereinzelt, daß zuerst der oberer Ladungsträger (2) anhebbar und der freiliegende untere Ladungsträger (2') weiter transportierbar ist und nachfolgend der obere Ladungsträger (2) absenkbar und die Karosse (K) auf einem Aufnahmegestell absetzbar ist.

10. Be- und Entladestation nach einem oder mehreren der vorhergehenden Ansprüche, **dadurch gekennzeichnet, daß** ein leerer Ladungsträger (2a) mit seinen aufgestellten Rungen (26) über eine Transportstrecke (23), welche parallel zum Ladewagen (8) verläuft, in der Arbeitsstation (S VI) einer Stapelvorrichtung (25) zuführbar ist und vor dieser Arbeitsstation die Rungen (26) in einer Einrichtung einzeln einklappbar sind und die Stapelvorrichtung (25) über eine Hubeinrichtung eine Stapelung von vier Ladungsträgern (L1 bis L4) zu dem Viererstapel (V) derart übereinander ausführt, daß jeweils der unten liegende Ladungsträger anhebbar ist und die weiteren Ladungsträger (L2, L3 und L4) nacheinander unterfahrbar sind.

11. Be- und Entladestation nach einem oder mehreren der vorhergehenden Ansprüche, **dadurch gekennzeichnet, daß** der Viererstapel (V) über Kettenförderer (27) in der Arbeitsstation (S VII) dem ortsfest und verschwenkbaren Drehtisch (28) mit integrierten Kettenförderern zuführbar ist, über die der Viererstapel (V) in Pfeilrichtung (31) in eine parallele Lage zum Ladewagen (8) verdrehbar ist.

12. Be- und Entladestation nach einem oder mehreren der vorhergehenden Ansprüche, **dadurch gekennzeichnet, daß** der Drehtisch (28) um eine vertikale Drehachse (29) von der Arbeitsstation (S VI) zur Übernahme des Viererstapels (V) in die um einen Winkel γ von 90° verdrehte Arbeitsstation (S VIII) zur Weitergabe an den Ladewagen (8) ausgeführt ist, wobei der Drehtisch (28) über Räder am Boden geführt wird.

13. Be- und Entladestation nach einem der vorhergehenden Ansprüche, **dadurch gekennzeichnet, daß** der Viererstapel (V) in der Arbeitsstation (S VIII) über die Ent- und Beladevorrichtung (10) des Ladewagens (8) anhebbar und in der Arbeitsstation (S IX) über die Kettenförderer (11) in den von der Ladungseinheit (4) entladenen Bahnwaggon (3) einsetzbar ist.

## Claims

1. A loading and unloading station for loading carriers (2) of vehicle bodies, vehicles and the like, which are capable of being conveyed in a railway car (3) and supplied from the latter in a plurality of successive working stations to a production plant, **characterized in that** loading units (4) provided with vehicle bodies (**K**) are capable of being conveyed out of the railway car (3) to a production plant (**F**) after passing through working stations (S I to S V) and the bodies are capable of being unloaded, and after that the empty loading carriers (2) are capable of being supplied in a cycle back to the railway car (3) by way of working stations (**S VI** to **S IX**).

2. A loading and unloading station according to Claim 1, **characterized in that** a loading unit (4) with two vehicle bodies (**K**) orientated in the longitudinal direction of the railway car (3) on loading carriers (2) is unloaded by way of an unloading and loading apparatus (10) of a loading car (8) movable parallel (directions of the arrow **X**) to the railway car (3, 3a, 3b, 3c) in the transverse direction (direction of the arrow **Y**) with respect to the latter and is capable of being conveyed on a turntable (14) which is situated parallel to the loading car (8) and is movable transversely to the latter (direction of the arrow **Z**) and from which the longitudinally orientated loading unit (4) is capable of being supplied to a conveying device (16) arranged transversely to the latter and from which the loading unit (4) is capable of being separated by way of an unstacking apparatus (19) into loading carriers (2, 2') arranged one behind the other, and the vehicle body (**K**) is removed by way of an apparatus and set down on a cradle and is capable of being supplied to the production plant (**F**) by way of a removal apparatus.

3. A loading and unloading station according to Claims 1 or 2, **characterized in that** the loading unit (4) is arranged with the two loading carriers (2, 2') one above the other in the railway car (3, 3a, 3b, 3c), and unloading of the loading unit (4) is carried out in a working station (**S I**) by way of the loading car (8) by means of the apparatus (10) by way of an integrated lifting and conveying device, and the loading unit (4) is capable of being supplied in a working station **(S II)** by way of chain conveyors (11) of the loading car (8) to the movable turntable (14) with a further chain conveyor (14a) from which the loading unit (4) is conveyed further in a working station (**S III**) by way of the chain conveyors (11) to a further chain conveyor (17) of the adjoining device (16) offset by an angle β of 90°, and the loading unit (4) is separated in a working station (S **IV)** by way of the gantry-type lifting device constructed in the form of an unstacking apparatus (19) into individual loading carriers (2, 2') arranged in one plane and, after that, in a working station (**S V**) the bodies (**K**) are lifted off the loading carrier (2, 2') in each case, and in a cycle in a further working station (S VI) in a stacking device (25) the said bodies (**K**) [are] assembled to form a stack of four (**V**) arranged one above the other and [are] capable of being supplied in a working station (**S VII**) to a turntable (28) pivotable in a stationary manner, and [are] capable of being moved in a working station (**S VIII**) from the pivoted turntable (28) by way of chain conveyors onto the positioned loading car (8) and being introduced from the latter in a working station (**S IX)** into an empty railway car (3, 3a).

4. A loading and unloading station according to Claims 1, 2 or 3, **characterized in that** the loading car (8) is capable of being moved on rails (9) parallel to the railway car (3) and on the one hand in the working station (**S I**) - corresponding to a first transfer position - for the loading unit (4) and on the other hand in the working station (**S VIII**) - corresponding to a further transfer position - the stack of four (V) is capable of being conveyed from the turntable (28') pivotable in a stationary manner in a cycle back into the first working station (**I**), corresponding to the working station **(IX),** in order to stow the stack of four (**V**) in the empty railway car (3).

5. A loading and unloading station according to Claims 1, 2, 3 or 4, **characterized in that** the loading car (8) in the apparatus (10) has two spaced lifting forks between which the chain conveyors (11) for the loading unit (4) or for the lower loading carrier (2') of the unit (4) are arranged, and in the working station (**SI**) the lifting forks of the apparatus (10) for conveying and lifting the loading unit (4) engage from below in receiving means (13) in the end faces of the carriers.

6. A loading and unloading station according to Claims 1, 2, 3, 4 or 5, **characterized in that** in the working position (**S I**) the loading unit (4) [is] capable of being set down on the chain conveyors (11) of the loading car (8) and is capable of being moved in the working station (**S I**) on the movable turntable (14) arranged in a parallel and orientated manner with respect to the loading car (8) onto the adjoining chain conveyors (15) of the turntable (14).

7. A loading and unloading station according to Claim 6, **characterized in that** the movable turntable (14) is capable of being turned at a right angle to the longitudinal axis (**L**) of the loading car (8) in the direction of the arrow (15), and the loading unit (4) is capable of being turned by an angle α of 90° by way of a pivot mounting of the turntable (14) in such a way that the mounted vehicle bodies **(K)** point with their front (B) in a direction opposed to the direction of travel of the turntable (14).

8. A loading and unloading station according to one or more of the preceding Claims, **characterized in that** in the working station **(SIII),** which corresponds to a transfer position, the turntable (14) is capable of being supplied, [to] a conveying path (16) adjoining the loading unit (4) at a right angle **β** to the latter, on chain conveyors (17) onto which the loading unit (4) is capable of being moved automatically from the turntable (14).

9. A loading and unloading station according to one or more of the preceding Claims, **characterized in that** the loading unit (4) is capable of being supplied by way of the chain conveyors (14a) of the turntable (14) from the working station **(S III)** to the unstacking apparatus (19) with forks which are extensible as well as capable of being raised and lowered and which separate the loading unit (4) in the working station (S IV) into mutually separate loading carriers (2, 2') in such a way that first the upper loading carrier (2) is capable of being lifted and the freed lower loading carrier (2') is capable of being transported further and after that the upper loading carrier (2) is capable of being lowered and the body **(K)** is capable of being placed on a receiving cradle.

10. A loading and unloading station according to one or more of the preceding Claims, **characterized in that** in the working station **(S VI)** an empty loading carrier (2a) is capable of being supplied - with its uprights (26) raised - over a conveying path (23), which extends parallel to the loading car (8), to a stacking apparatus (25), and upstream of the said working station the uprights (26) are capable of being folded individually in a device, and the stacking apparatus (25) carries out the stacking of four loading carriers **(L1** to **L4)** by way of a lifting device to form the stack of four **(V)** in such a way that in each case the loading carrier situated at the bottom is capable of being lifted and the further loading carriers **(L2, L3** and **L4)** are capable of being inserted below in succession.

11. A loading and unloading station according to one or more of the preceding Claims, **characterized in that** in the working station (S **VII)** the stack of four **(V)** is capable of being supplied by way of chain conveyors (27) to the stationary and pivotable turntable (28) with integrated chain conveyors, by way of which the stack of four **(V)** is capable of being turned in the direction of the arrow (31) into a position parallel with respect to the loading car (8).

12. A loading and unloading station according to one or more of the preceding Claims, **characterized in that** the turntable (28) is designed around a vertical axis of rotation (29) of the working station (**S VI**) in order to transfer the stack of four (**V**) into the working station **(S VIII)** rotated through an angle γ of 90° so as to pass it on to the loading car (8), wherein the turntable (28) is guided on the ground by way of wheels.

13. A loading and unloading station according to one or more of the preceding Claims, **characterized in that** in the working station (**S VIII**) the stack of four (**V**) is capable of being lifted by way of the unloading and loading apparatus (10) of the loading car (8) and in the working station **(S IX)** it is capable of being inserted by way of the chain conveyors (11) into the railway car (3) unloaded by the loading unit (4).

## Revendications

1. Poste de chargement et de déchargement pour porteurs de charge (2) de carrosseries de véhicules, de véhicules et similaires, qui peuvent être transportés dans un wagon ferroviaire (3), et peuvent être amenés à partir de celui-ci dans plusieurs postes de travail successifs d'un cycle de production, **caractérisé en ce que** des unités de charge (4) équipées de carrosseries de véhicules (K) peuvent être transportées à partir du wagon ferroviaire (3), après un passage aux postes de travail (S I à S V), jusqu'à un site de fabrication (F) et les carrosseries peuvent être déchargées, et ensuite dans un cycle, les porteurs de charge (2) vides peuvent être amenés au moyen de postes de travail (S VI à S IX), à nouveau au wagon ferroviaire (3).

2. Poste de chargement et de déchargement selon la revendication 1, **caractérisé en qu'**une unité de charge (4) avec deux carrosseries de véhicules (K) orientées dans le sens longitudinal des wagons ferroviaires (3) sur des porteurs de charge (2) est déchargée à cet effet au moyen du dispositif de déchargement et de chargement (10) d'un charriot de chargement (8) déplaçable parallèlement au wagon ferroviaire (3, 3a, 3b, 3c) (directions de flèche X) dans le sens transversal (sens de flèche Y) et peut être transportée sur une table tournante (14) disposée parallèlement au charriot de chargement (8) et déplaçable transversalement à ce charriot (sens de flèche Z), table à partir de laquelle l'unité de charge (4) orientée dans le sens de la longueur peut être amenée à un dispositif de transport (16) disposé transversalement à cette unité, à partir de laquelle l'unité de charge (4) peut être divisée au moyen d'un dispositif de désempilement (19) dans des porteurs de charge (2, 2') disposés les uns derrière les autres et la carrosserie de véhicule (K) est enlevée au moyen d'un dispositif et posé sur un châssis et peut être amené au moyen d'un dispositif d'enlèvement au site de fabrication (F).

3. Poste de chargement et de déchargement selon les revendications 1 ou 2, **caractérisé en ce que** l'unité de charge (4) avec les deux porteurs de charge (2, 2') l'un au-dessus de l'autre est disposée dans le wagon ferroviaire (3, 3a, 3b, 3c) et **en ce que** dans un poste de travail (S I), un déchargement de l'unité de charge (4) par l'intermédiaire du charriot de chargement (8) s'effectue au moyen du dispositif (10) par le biais d'un dispositif de levage et de transport intégré et **en ce que**, dans un poste de travail (S II), l'unité de charge (4) peut être amenée au moyen de convoyeurs à chaînes (11) du charriot de chargement (8) à la table tournante (14) déplaçable avec un autre transporteur à chaîne (14a), à partir de laquelle dans un poste de travail (S III), l'unité de charge (4) est acheminée au moyen des convoyeurs à chaînes (11) à un autre convoyeur à chaîne (17) décalé d'un angle β de 90° du dispositif (16) consécutif, et **en ce que**, dans un poste de travail (S IV), l'unité de charge (4) est séparée en des porteurs de charge (2, 2') individuels, disposés dans un plan, au moyen du dispositif de levage à portique réalisé comme dispositif de désempilement (19) et ensuite, dans un poste de travail (S V), les carrosseries (K) sont soulevées respectivement du porteur de charge (2, 2'), et ces porteurs de charge sont regroupés dans le cycle dans un autre poste de travail (S VI) dans un dispositif d'empilement (25) en une pile de quatre (V) de façon superposée et **en ce que** dans un poste de travail (S VII), ils peuvent être amenés à une table tournante (28) basculante de façon fixe et, dans un poste de travail (S VIII), ils peuvent être posés de la table tournante (28) basculée au moyen de convoyeurs à chaînes sur le charriot de chargement (8) positionné et à partir de là peuvent être introduits dans un wagon ferroviaire (3, 3a) vide dans un poste de travail (S IX).

4. Station de chargement et de déchargement selon les revendications 1, 2 ou 3, **caractérisé en ce que** le charriot de chargement (8) peut être placé sur des rails (9) parallèlement au wagon ferroviaire (3) et **en ce que** d'une part au poste de travail (S I), selon une première position de transfert, pour l'unité de charge (4) et d'autre part au poste de travail (S VIII), selon une autre position de transfert, la pile de quatre (V) peut être transportée depuis la table tournante (28') basculable de façon fixe dans un cycle de retour à la position au premier poste de travail (I) conformément au poste de travail (IX) pour le logement de la pile de quatre (V) dans le dernier wagon ferroviaire (3).

5. Station de chargement et de déchargement selon les revendications 1, 2, 3 ou 4, **caractérisé en ce que** le charriot de chargement (8) présente dans le dispositif (10) deux fourches de levage espacées entre lesquelles sont disposés les convoyeurs à chaînes (11) pour l'unité de charge (4) ou pour le support de charge (2') inférieur de l'unité et, dans le poste de travail (S I), les fourches de levage du dispositif (10) pour le transport et le soulèvement de l'unité de charge (4) s'engagent dans des logements (13) côté avant des porteurs.

6. Poste de chargement et de déchargement selon les revendications 1, 2, 3, 4 ou 5, **caractérisé en ce que**, dans le poste de travail (S I), l'unité de charge (4) peut être déposée sur les convoyeurs à chaînes (11) du wagon de chargement (8) et peut coulisser sur la table tournante (14) déplaçable de façon parallèle et disposée orientée vers le wagon de chargement (8) au poste de travail (S II), sur le convoyeur à chaîne (15) consécutif de la table tournante (14).

7. Poste de chargement et de déchargement selon la revendication 6, **caractérisé en ce que** la table tournante (14) déplaçable peut tourner dans un angle droit par rapport à l'axe longitudinal (L) du charriot de chargement (8) dans le sens de flèche (15) et l'unité de charge (4) peut tourner au moyen d'un châssis tournant de la table tournante (14) à un angle α de 90° de telle sorte que les carrosseries de véhicule (K) posées dessus sont dirigées avec l'avant du véhicule (B) dans le sens contraire au sens de déplacement de la table tournante (14).

8. Poste de chargement et de déchargement selon l'une quelconque ou plusieurs des revendications précédentes, **caractérisé en ce que** la table tournante (14) au poste de travail (S III), qui correspond à une position de transfert, peut être ramenée à un tronçon de transport (16), raccordé à cet effet à l'unité de charge (4) sous un angle droit β, sur des convoyeurs à chaîne (17), sur lesquels l'unité de charge (4) peut être déplacée automatiquement à partir de la table tournante (14).

9. Poste de chargement et de déchargement selon l'une quelconque ou plusieurs des revendications précédentes, **caractérisé en ce que** l'unité de charge (4) peut être ramenée au moyen des convoyeurs à chaîne (14a) de la table tournante (14) du poste de travail (S III) au dispositif de désempilement (19) avec des fourches pouvant être sorties ainsi que soulevées et abaissées, qui séparent l'unité de charge (4) au poste de travail (S IV) en porteurs de charge (2, 2') séparés les uns des autres de telle sorte que d'abord le porteur de charge (2) supérieur peut être soulevé et le porteur de charge (2') inférieur libre peut être transporté plus loin et ensuite le porteur de charge (2) supérieur peut être abaissé et la carrosserie (K) peut être posée sur un châssis de logement.

10. Poste de chargement et de déchargement selon l'une quelconque ou plusieurs des revendications précédentes, **caractérisé en ce que** qu'un porteur de charge (2a) vide peut être amené avec ses ridelles (26) montées au moyen d'un tronçon de transport (23), qui est parallèle au charriot de chargement (8), dans le poste de travail (S VI) à un dispositif d'empilement (25) et les ridelles (26) peuvent être repliées individuellement dans un dispositif avant ce poste de travail et le dispositif d'empilement (25) exécute au moyen d'un dispositif de lavage un empilement de quatre porteurs de charge (L1 à L4) pour former la pile de quatre (V) les uns au-dessus des autres de telle sorte que chacun des porteurs de charge sous-jacents peut être levé et les autres porteurs de charge (L2, L3 et L4) peuvent être déplacés au-dessous de façon successive.

11. Poste de chargement et de déchargement selon l'une quelconque ou plusieurs des revendications précédentes, **caractérisé en ce que** la pile de quatre (V) peut être amenée au moyen de convoyeur à chaîne (27) au poste de travail (S VII) à la table tournante (28) basculant de façon fixe avec des convoyeurs à chaînes intégrés, par lesquels la pile de quatre (V) peut tourner dans le sens de flèche (31) dans une position parallèle au wagon de chargement (8).

12. Poste de chargement et de déchargement selon l'une quelconque ou plusieurs des revendications précédentes, **caractérisé en ce que** la table tournante (28) est réalisée autour d'un axe de rotation (29) vertical à partir du poste de travail (S VI) pour la prise en charge de la pile de quatre (V) dans le poste de travail (S VIII) tourné d'un angle γ de 90° pour la transmission au wagon de chargement (8), la table tournante (28) étant guidée par des roues sur le sol.

13. Poste de chargement et de chargement selon l'une quelconque des revendications précédentes, **caractérisé en ce que** la pile de quatre (V) peut être soulevée au poste de travail (S VIII) au moyen du dispositif de chargement et déchargement (10) du charriot de chargement (8) et peut être inséré au poste de travail (S IX) au moyen des convoyeurs à chaînes (11) dans le wagon ferroviaire (3) déchargé par l'unité de charge (4).
